# EUROPÄISCHE PATENTANMELDUNG

(11) **EP 2 444 233 A2**
(43) Veröffentlichungstag der Anmeldung: **25.04.2012**
(21) Anmeldenummer: 11185799.1
(22) Anmeldetag: 19.10.2011
(51) Int. Cl.: B29C 49/56

(54) **Blasformmaschine mit Formhalteeinrichtung und entsprechendes Verfahren**

(30) Priorität: 19.10.2010 DE 102010048720
(71) Anmelder: Krones AG, 93073 Neutraubling (DE)
(72) Erfinder: Blochmann, Erik, 93073 Neutraubling (DE); Lindner, Maria, 93345 Hausen (DE); Wittmann, Christian, 93155 Hemau (DE)
(74) Vertreter: Hannke, Christian

(57) **Zusammenfassung**

Eine Vorrichtung zum Umformen von Kunststoffvorformlingen in Kunststoffbehältnisse mit wenigstens einer Blasstation (1), welche einen Hohlraum aufweist, innerhalb dessen die Kunststoffvorformlinge zu den Kunststoffbehältnissen expandierbar sind, wobei die Blasstation (1) ein Bodenteil (2) aufweist, welches den Hohlraum begrenzt und wobei das Bodenteil (2) lösbar mittels eines Befestigungsmechanismus (10, 12, 14, 16, 18, 28) an einem Träger (6) angeordnet ist. Erfindungsgemäß weist die Vorrichtung ein mit einer zuschaltbaren Kraft beaufschlagbares Kraftausübungselement (10) auf, welches in einem befestigten Zustand des Bodenteils (2) an dem Träger (6) eine Haltekraft erzeugt, welche das Bodenteil (2) und den Träger (6) aneinander hält.

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt und weisen dabei üblicherweise eine Vielzahl von Blasstationen auf, welche an einem Trägerrad angeordnet sind, und welche zur Umformung von Kunststoffvorformlingen zu Kunststoffbehältnissen mittels Blasumformung dienen.

Dabei weisen derartige Blasstationen üblicherweise zwei Formteile auf, die gemeinsam mit einem Bodenteil einen Hohlraum begrenzen, innerhalb dessen die Kunststoffvorformlinge expandiert werden. Bei einem Garniturenwechsel ist es erforderlich, die Bodenteile auszutauschen. Dabei sind im Stand der Technik die Bodenteile üblicherweise an einem Träger angeschraubt, und müssen daher bei einem Montagewechsel relativ aufwendig demontiert werden. Weiterhin ist es jedoch gefordert, dass die Bodenteile stabil gegenüber ihren jeweiligen Trägern angeordnet sind.

Aus der EP 1 299 223 B1 ist eine Vorrichtung zur Blasformung von Behältern bekannt. Dabei ist ein Bodeneinsatz vorgesehen, der mit einer Positioniereinrichtung verbunden ist. Zur Verbindung wird dabei ein Kupplungsprofil verwendet, dass aus einem mit einer Grundplatte verbundenem Kopplungselement sowie einem mit dem Bodenelement verbundenen Gegenelement ausgebildet ist und von einem Handhebel betätigbar ist, um ein entsprechendes Lösen des Bodeneinsatzes zu bewirken.

Die US 5,750,161 beschreibt einen Schnellwechselmechanismus für eine Blasformeinrichtung. Dabei sind ein erstes und ein zweites Verschließelement vorgesehen wobei das zweite Verschließelement beweglich zwischen einer mit dem ersten Schließelement verschlossenen Position und einer gelösten Position angeordnet ist.

In der bislang noch unveröffentlichten Patentanmeldung DE 10 2009 035 871.4 der Anmelderin wird ein Schnellwechselmechanismus für Bodenteile beschrieben. Dabei wird über ein drehbares Verbindungsteil die Bodenform bzw. ein Adapterstück welches mit der Bodenform in Verbindung steht an einen Träger angespannt. Diese Vorrichtung arbeitet zufriedenstellend und erlaubt ein vergleichsweise schnelles Montieren und Demontieren der Bodenteile. Allerdings muss zum Spannen des Bodenteils an dem Träger bereits eine sehr hohe Kraft aufgewandt werden, um die im Endeffekt gewünschte Haltekraft zu erreichen. Der Gegenstand der DE 10 2009 035 871.4 wird hiermit durch Bezugnahme auch zum Gegenstand der vorliegenden Anmeldung gemacht.

Der vorliegenden Erfindung liegt daher die Aufgabe zugrunde, einen Schnellwechselmechanismus zur Verfügung zu stellen, der eine im Vergleich zum beschriebenen Stand der Technik verminderte Kraft zu Montieren und Demontieren benötigt.

Dies wird erfindungsgemäß durch eine Vorrichtung nach Anspruch 1 erreicht. Vorteilhafte Ausführungsformen und Weiterbildungen sind Gegenstand der Unteransprüche.

Eine erfindungsgemäße Vorrichtung zum Umformen von Kunststoffvorformlingen in Kunststoffbehältnisse weist wenigstens eine Blasstation auf, welche einen Hohlraum aufweist, innerhalb dessen die Kunststoffvorformlinge zu den Kunststoffbehältnissen expandierbar sind bzw. expandiert werden. Dabei weist die Blasstation ein Bodenteil auf, welches den Hohlraum begrenzt und das Bodenteil ist lösbar mittels eines Befestigungsmechanismus an einem Träger angeordnet.

Erfindungsgemäß weist die Vorrichtung bzw. dieser Befestigungsmechanismus ein mit einer zuschaltbaren Kraft beaufschlagbares Kraftausübungselement (10), welches in einem befestigten Zustand des Bodenteils an dem Träger eine Haltekraft erzeugt, welche das Bodenteil und den Träger aneinander hält.

Es wird daher vorgeschlagen, dass ein Kraftausübungselement vorgesehen ist, welches, wenn eine Arretierung gewünscht wird, mit einer zusätzlichen Kraft beaufschlagt werden kann, um so im Ergebnis die erforderliche Haltekraft zu erzeugen. Dabei entsteht diese Haltekraft bevorzugt nicht durch den eigentlichen Befestigungsvorgang, sondern kann durch den Benutzer nach Wunsch zugeschaltet werden.

Bevorzugt ist das Kraftausübungselement mit einem fließfähigen Medium oder mit einer magnetischen Kraft beaufschlagbar. So wäre es beispielsweise möglich, ein fließfähiges Medium wie beispielsweise Druckluft zuzuführen um auf dieser Weise das Kraftausübungselement mit der zuschaltbaren Kraft zu beaufschlagen. Auch wäre es möglich, dass es sich bei der zuschaltbaren Kraft um eine zuschaltbare magnetische Kraft handelt. So könnte beispielsweise die Vorrichtung einen Permanentmagneten sowie einen Elektromagneten aufweisen und ein Zuschalten der Kraft könnte dadurch erfolgen, dass der Elektromagnet aktiviert wird und auf diese Weise eine Abstoßung zwischen dem Elektromagneten und dem als Permanentmagnet ausgeführten Kraftausübungselement erzeugt wird, welche Abstoßung wiederum die Haltekraft bewirkt. Auch wäre es möglich, dass das Kraftausübungselement selbst als Elektromagnet ausgeführt ist.

Daneben wäre es auch möglich, dass die Vorrichtung zwei sich abstoßende Permanentmagneten aufweist und die Kraft in der Weise zugeschaltet wird, dass ein Abstand zwischen diesen beiden Magneten verringert wird. Auch könnte ein Elektromagnet vorgesehen sein, der bei Aktivierung das Kraftausübungselement anzieht und so die Haltekraft bewirkt

Daneben wäre es auch möglich, dass es sich bei der zuschaltbaren Kraft um eine durch ein elektrisches Feld vermittelte Kraft handelt.

Im Gegensatz zu dem beschriebenen Stand der Technik wird daher vorgeschlagen, dass nicht der Benutzer bei der Montage die nötige Kraft zum Montieren vollständig aufbringen muss, sondern insbesondere während eines Arbeitsbetriebs zumindest ein wesentlicher bzw. ein großer Teil der Haltekraft auch durch das mit dem fließfähigen Medium beaufschlagbare oder allgemein mit der zuschaltbaren Kraft beaufschlagbare Kraftausübungselement erzeugt wird. Dabei ist es möglich, dass das Kraftausübungselement beispielsweise durch Luftdruck, d. h. pneumatisch in eine Stellung gebracht wird, in der es das Aneinanderhalten des Bodenteils und des Trägers bewirkt.

Das Kraftausübungselement ist dabei bevorzugt zur Herbeiführung einer Haltekraft gegenüber wenigstens einem weiteren Bestandteil des Befestigungsmechanismus und insbesondere gegenüber dem Bodenteil bewegbar. Besonders bevorzugt ist das Kraftausübungselement entlang einer geraden Richtung bewegbar und insbesondere entlang der Richtung, entlang derer auch das Bodenteil im Arbeitsbetrieb an die Seitenteile der Blasform oder von diesen wegbewegt wird. Bevorzugt wir die Haltekraft durch einen Druck des fließfähigen Mediums erzeugt.

Es wäre jedoch auch möglich, dass ein Unterdruck bzw. ein Vakuum verwendet wird, welche die besagten Haltekräfte erzeugt. Dabei kann die besagte Haltekraft direkt zwischen dem Bodenteil und dem Träger wirken, es wäre jedoch auch möglich und ist bevorzugt, dass die Haltekraft zwischen anderen Elementen, beispielsweise einerseits zwischen Elementen, die an dem Träger angeordnet sind und andererseits Elementen die an dem Bodenteil angeordnet sind, erzeugt wird.

Dabei ist es möglich, dass im Arbeitsbetrieb das Kraftausübungselement permanent mit Druck bzw. Luftdruck beaufschlagt wird.

Bei einer vorteilhaften Ausführungsform weist der Befestigungsmechanismus wenigstens einen an einem ersten Befestigungselement angeordneten stiftartigen Körper auf, der in einem befestigten Zustand des Bodenteils an dem Träger in eine in einem zweiten Befestigungselement angeordnete Nut eingreift, wobei der stiftartige Körper gegenüber der Nut vorteilhaft verschiebbar ist. Durch diesen Eingriff des stiftartigen Körpers in die Nut können die Befestigungselemente gegeneinander orientiert werden. Auf diese Weise kann anhand der Montage ein provisorisches Befestigen bzw. eine Vorfixierung erreicht werden. Vorteilhaft wird jedoch während des Fixierens das Befestigungselement mit der darin angeordneten Nut bewegt.

Bei einer weiteren vorteilhaften Ausführungsform ist die Nut derart beschaffen, dass ein Endabschnitt des stiftartigen Körpers die Nut in einem ersten Bereich der Nut passieren kann und die Nut in einem zweiten Bereich der Nut nicht passieren kann. Auf diese Art kann die Nut beispielsweise schlüssellochartig ausgeführt sein, wobei zum Aufsetzen des Bodenteils auf den Träger vorteilhaft die stiftartigen Körper in die Nut eindringen können und zum endgültigen Halten bevorzugt in Eingriff mit der besagten Nut stehen. So kann beispielsweise der stiftartige Körper an seinem Außenumfang wenigstens eine Ausnehmung aufweisen bzw. in diesem Bereich dieser Ausnehmung einen geringeren Querschnitt aufweisen. Dabei ist bevorzugt die Ausnehmung in dem stiftartigen Körper umlaufend ausgebildet. Vorteilhaft ist die Ausnehmung hinsichtlich des Querschnitts derart beschaffen, dass sie vollständig innerhalb der oben besagten Nut verschoben werden kann. Damit greift diese Ausnehmung in die Nut bzw. die Ränder der Nut ein und der stiftartige Körper kann auf diese Weise in einem zweiten Bereich der Nut in seiner Längsrichtung im Wesentlichen nicht mehr gegenüber der Nut bewegt werden bzw. nur entlang der Breite der besagten Nut.

Bei einer weiteren vorteilhaften Ausführungsform ist das Bodenteil an einem Adapterelement angeordnet und das Adapterelement ist über den Befestigungsmechanismus an dem Träger angeordnet. Mittels dieses Adapterelements können unterschiedliche Höhenbewegungen des Bodenteils gegenüber der Blasstation bzw. gegenüber den Seitenteilen ausgeglichen werden.

Bei einer weiteren vorteilhaften Ausführungsform steht der wenigstens eine stiftartige Körper in Verbindung mit dem Bodenteil. Dabei ist es möglich, dass der stiftartige Körper unmittelbar an dem Bodenteil angeordnet ist, es wäre jedoch auch möglich, dass der stiftartige Körper an dem oben erwähnten Adapterelement angeordnet ist und dieses Adapterelement wiederum an dem Bodenteil. Auch auf diese Weise ist der stiftartige Körper in (mittelbarer) Verbindung mit dem Bodenteil.

Bei einer weiteren vorteilhaften Ausführungsform ist das Befestigungselement drehbar gegenüber dem Bodenteil angeordnet. Dabei ist es möglich, dass zum Lösen des Bodenteils das Befestigungselement um eine vorgegebene Drehachse gedreht wird, es wäre jedoch auch möglich, dass das Bodenteil selbst gedreht wird, um dessen Lösung zu erreichen.

Bei einer weiteren vorteilhaften Ausführungsform weist die Vorrichtung wenigstens ein Federelement zum Vorspannen des stiftartigen Körpers gegenüber dem ersten Befestigungselement auf. Bei einer bevorzugten Ausführungsform handelt es sich bei dem Befestigungselement um das oben erwähnte Adapterelement. In diesem Fall wird der stiftartige Körper gegenüber dem Befestigungselement vorgespannt und bevorzugt auf dieses erste Befestigungselement zu vorgespannt.

Bei einer weiteren vorteilhaften Ausführungsform ist das erste Befestigungselement drehbar um eine vorgegebene Drehachse angeordnet. Vorteilhaft erstrecken sich in diesem Fall die oben genannten Nuten zumindest teilweise und bevorzugt vollständig in der Umfangsrichtung des Befestigungselementes. Durch die Drehung des Befestigungselements kann auf diese Weise ein Lösen des Bodenteils erreicht werden. Vorteilhaft ist an dem zweiten Befestigungselement ein Hebel angeordnet, mit dessen Hilfe der Benutzer eine Verdrehung des ersten Befestigungselements erreichen kann.

Bei einer weiteren vorteilhaften Ausführungsform ist zwischen dem ersten Befestigungselement und dem zweiten Befestigungselement in einem montierten Zustand des Bodenteils ein Tragekörper angeordnet. So ist es möglich, dass der Tragekörper selbst ruhend angeordnet ist und auf diesem Tragekörper das Bodenteil aufgesetzt wird. Durch eine Verdrehung des zweiten Befestigungselements kann das Bodenteil gegenüber dem Träger arretiert werden, ohne dabei selbst gedreht werden zu müssen. Bevorzugt erstrecken sich der oder die stiftartigen Körper durch den Tragekörper hindurch. Dieser Tragekörper dient vorteilhaft zum Zentrieren des Bodenteils.

Bei einer weiteren vorteilhaften Ausführungsform weist die Vorrichtung wenigstens zwei zueinander beabstandete stiftartige Körper auf. Entsprechend sind bevorzugt auch wenigstens zwei Nuten vorgesehen, in denen die beiden stiftartigen Körper verlaufen. Auf diese Weise wird eine besonders stabile Arretierung des Bodenteils ermöglicht.

Vorzugsweise sind die beiden stiftartigen Körper bezüglich einer Drehachse des zweiten Befestigungselements einander gegenüberliegend angeordnet. Auch die Nuten sind vorteilhaft punktsymmetrisch bezüglich einer Drehachse angeordnet.

Bei einer weiteren vorteilhaften Ausführungsform sind innerhalb des ersten Befestigungselements Kanäle zum Leiten eines fließfähigen Mediums vorgesehen. Bei diesem fließfähigen Medium kann es sich dabei insbesondere um eine Kühlflüssigkeit zum Kühlen des Bodenteils handeln. Auch in dem Bodenteil selbst könnten dabei entsprechende Kühlkanäle vorgesehen sein.

Das Vorsehen dieser Kanäle zum Leiten eines fließfähigen Mediums erleichtert auch die Schnellmontage des Bodenteils, da auf diese Weise nicht nur das Bodenteil selbst schnell montiert werden kann sondern zugleich auch die nötigen Kühlflüssigkeitsverbindungen hergestellt bzw. geschlossen werden können.

Vorteilhaft sind daher an dem ersten Befestigungselement Flüssigkeitsanschlüsse angeordnet, die sich in einer Längsrichtung des stiftartigen Körpers erstrecken. Auf diese Weise können beim Aufsetzen des Bodenteils an das zweite Befestigungselement auch die Flüssigkeitsanschlüsse in entsprechende Kupplungen hineingeschoben werden, so dass in einem Arbeitsgang auch die Kühlflüssigkeitsverbindung hergestellt wird.

Der Eingriff des stiftartigen Körpers in die Nut dient jedoch hier nicht dazu, um die Haltekraft im Arbeitsbetrieb herzustellen, sondern lediglich, um einen Vordruck bzw. eine Vorhaltekraft aufzubauen.

Bei einer weiteren vorteilhaften Ausführungsform übt das Kraftausübungselement in einem mit dem fließfähigen Medium beaufschlagten Zustand eine das Befestigungselement und den Tragekörper auseinanderdrückende Kraft aus. Durch diese auseinanderdrückende Kraft wird, wie unten genauer erläutert wird, die Haltekraft des Bodenteils an dem Träger bewirkt.

Vorteilhaft ist in dem Tragekörper oder in dem Befestigungselement ein Kanal für das fließfähige Medium angeordnet. Dabei ist vorteilhaft dieser Kanal vollständig in dem Tragekörper oder vollständig in dem Befestigungselement. Bei dem fließfähigen Medium handelt es sich insbesondere um Luft, sodass das Kraftausübungselement durch den besagten Luftdruck in Lage versetzt wird, seine Kraft auszuüben. Vorteilhaft verläuft der besagte Kanal für das fließfähige Medium in einer radialen Richtung.

Bei einer weiteren vorteilhaften Ausführungsform ist das Kraftausübungselement ein gegenüber dem Tragkörper bewegbares Kolbenelement und ein Raum zwischen dem Tragekörper und dem Kolbenelement ist mit dem fließfähigen Medium beaufschlagbar. Durch diese Beaufschlagung des besagten Raums kann das Kolbenelement von dem Tragekörper wegbewegt werden. Vorteilhaft ist das Kolbenelement oberhalb und unterhalb des besagten Raums gegenüber dem Tragekörper abgedichtet. Dabei kann beispielsweise das Kolbenelement einen kreisförmigen Querschnitt aufweisen sowie Dichtungseinrichtungen, wie O-Ringe. Der besagte Raum ist vorteilhaft ringförmig um einen Bereich des Kolbenelements angeordnet. Auf diese Weise ist eine gleichmäßige Druckbeaufschlagung des Kolbenelements möglich. Bei einer weiteren vorteilhaften Ausführungsform ist zwischen dem Tragekörper und dem zweiten Befestigungselement eine Vorspanneinrichtung angeordnet, welche das Befestigungselement und den Tragekörper auseinanderdrängt. Durch dieses Auseinanderdrängen des Befestigungselements und des Tragekörpers wird, wie unten genauer erläutert wird, das Bodenteil an seinem Träger befestigt.

Vorteilhaft weist die Vorrichtung auch ein Reservoir zur Zurverfügungstellung von flüssigen Medien, wie insbesondere Druckluft, auf. Dabei können beispielsweise die Druckniveaus, welche auch für den Blasprozess verwendet werden, zur Befestigung des Bodenteils und dem Träger vorgesehen sein. Dabei kann vorteilhaft die Kraft, mit der das Bodenteil an dem Träger gehalten wird, von einer Relativstellung zwischen dem Befestigungselement und dem Tragekörper abhängen. Vorteilhaft ist jedoch die Kraft, welche durch die besagte Vorspanneinrichtung aufgebracht wird, geringer als die Kraft, welche im Arbeitsbetrieb durch das Kraftausübungselement aufgebracht wird. Auf diese Weise wird erreicht, dass der Widerstand, den ein Benutzer überwinden muss, um das Bodenteil zu lösen oder zu montieren, vergleichsweise gering gehalten ist.

Bei einer weiteren vorteilhaften Ausführungsform weist die Vorrichtung eine zweite Vorspanneinrichtung auf, welche den Träger und das zweite Befestigungselement auseinanderdrängt. Dabei kann es sich auch bei dieser zweiten Vorspanneinrichtung um eine Feder handeln. Vorteilhaft ist diese zweite Feder schwächer als die oben erwähnte erste Feder und bevorzugt auch schwächer als der Druck, der durch das Kraftausübungselement aufgebracht werden kann.

Bei einer weiteren vorteilhaften Ausführungsform ist das zweite Befestigungselement drehbar um eine vorgegebene Drehachse angeordnet. Dies bedeutet, dass ein Arretieren des Bodenteils durch eine Drehbewegung des besagten zweiten Befestigungselements erreicht wird.

Bei einer weiteren vorteilhaften Ausführungsform ist das zweite Befestigungselement längsverschiebbar bzgl. einer vorgegebenen Achse angeordnet. Dies bedeutet, dass ein Arretieren des Bodenteils durch eine Schubbewegung des besagten zweiten Befestigungselements erreicht wird.

Die vorliegende Erfindung ist weiterhin auf ein Verfahren zum Befestigen eines Bodenteils einer Vorrichtung zum Umformen von Kunststoffvorformlingen zu Kunststoffbehältnissen an einem Träger gerichtet. Dabei wird erfindungsgemäß durch Beaufschlagen eines Kraftausübungselements mit einem fließfähigen Medium eine Haltkraft zwischen dem Träger und dem Bodenteil erzeugt bzw. verstärkt. Vorteilhaft wird hierzu ein Luftraum zwischen dem Kraftbeaufschlagungselement und einem Befestigungselement mit dem fließfähigen Element und insbesondere mit Luft beaufschlagt. Vorteilhaft wird die besagte Haltekraft in einem Arbeitsbetrieb der Vorrichtung erzeugt.

Bei einem weiteren vorteilhaften Verfahren wird durch einen Befestigungsmechanismus eine weitere Haltekraft zwischen dem Träger und dem Bodenteil erzeugt, wobei diese weitere Haltekraft geringer ist als die durch die Beaufschlagung des Kraftausübungselements erzeugte Kraft.

Weitere Vorteile und Ausführungsformen ergeben sich aus den beigefügten Zeichnungen. Darin zeigen:
- Fig. 1: eine perspektivische Teilansicht einer Blasstation einer erfindungsgemäßen Vorrichtung;
- Fig. 2: eine Detailansicht eines Verriegelungsmechanismus;
- Fig. 3: eine schematische Draufsicht auf ein Bodenteil;
- Fig. 4a, 4b: zwei Darstellungen eines Bodenteils in einem Montier- oder Demontierzustand;
- Fig. 5a, 5b: zwei Darstellungen des Bodenteils in einem fixierten Zustand;
- Fig. 6a, 6b: zwei Darstellungen eines Bodenteils in einem fixierten und vorgespannten Zustand; und
- Fig. 7a, 7b: zwei Darstellungen des Bodens in einem fixierten, vorgespannten und unter Betriebskraft stehenden Zustand.

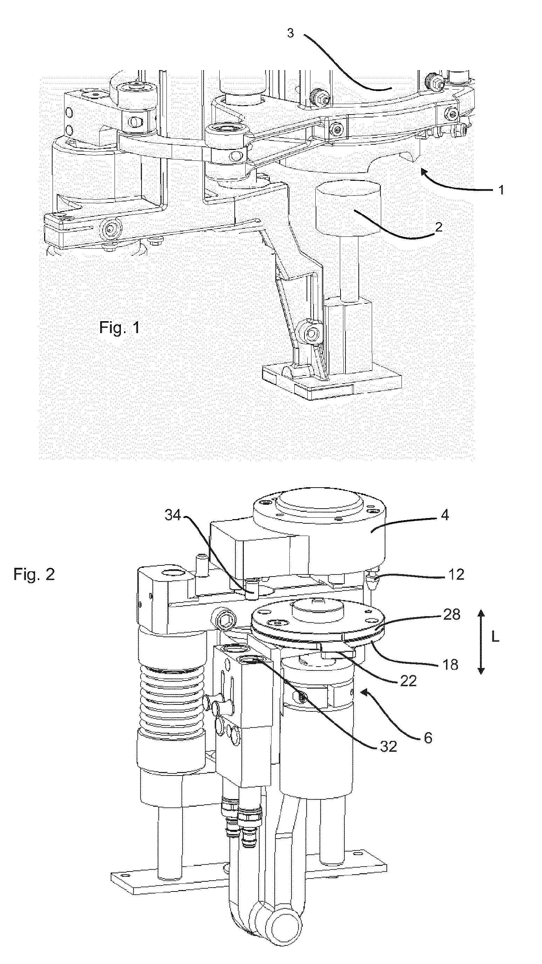

Fig. 1 zeigt eine Teildarstellung einer erfindungsgemäßen Blasstation 1. Diese Blasstation 1 weist dabei (nur teilweise dargestellte) Seitenteile 3 auf, welche gemeinsam mit einem (schematisch dargestellten) Bodenteil 2 einen (nicht gezeigten) Hohlraum begrenzen. Das Bezugszeichen 1 kennzeichnet dabei die Blasstation in ihrer Gesamtheit. Eine erfindungsgemäße Vorrichtung kann dabei eine Vielzahl von Blasstationen aufweisen, die beispielsweise an einem gemeinsamen Trägerrad angeordnet sein können.

Fig. 2 zeigt eine erste Darstellung zur Veranschaulichung des Befestigungsmechanismuses. Dabei ist hier ein Adapterelement 4 vorgesehen, an dem wiederum das (nicht gezeigte) Bodenteil befestigt wird. An diesem Adapterelement 4 sind zwei stiftartige Körper 12 vorgesehen, wobei jedoch nur ein stiftartiger Körper 12 sichtbar ist. Weiterhin ist an dem Adapterelement 4 ein Anschluss 34 vorgesehen, der zur Versorgung der innerhalb des Adapterelements 4 liegenden Kühlmittelleitung mit Flüssigkeit und insbesondere Wasser dient. Das Adapterelement 4 ist hier gleichzeitig auch das erste Befestigungselement im Sinne der obigen Beschreibung. Das Bezugszeichen 18 bezieht sich auf das zweite Befestigungselement bei dem es sich hier um eine Verriegelungsscheibe handelt, die um einen feststehenden Zylinderbolzen drehbar gelagert ist.

Das Bezugszeichen 28 bezieht sich auf einen Tragekörper, der in einem montierten Zustand zwischen dem Adapterelement 4 und dem zweiten Befestigungselement 18 angeordnet ist. Das Bezugszeichen 22 kennzeichnet einen Hebel, um das zweite Befestigungselement 18 zu drehen. Das Bezugszeichen 6 kennzeichnet in seiner Gesamtheit den Träger, an dem das Bodenteil angeordnet ist.

An dem Träger 6 ist wiederum vorteilhaft fest der Tragekörper 28 angeordnet. Das Bezugszeichen 32 bezieht sich auf Kupplungen, in welche die Anschlüsse 34 in einer Längsrichtung L der stiftartigen Körper 12 eingeführt werden.

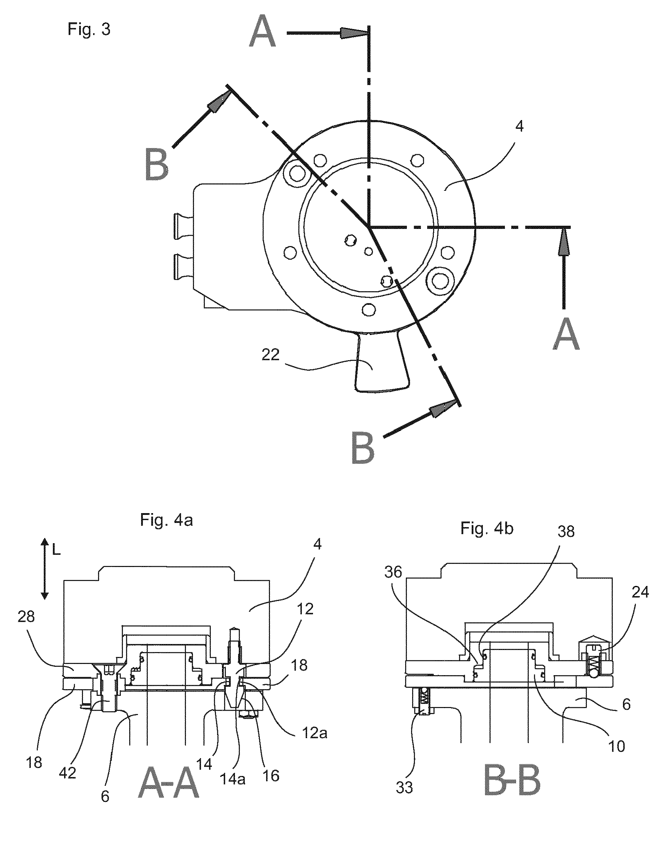

Fig. 3 zeigt eine Draufsicht auf einen Teil einer erfindungsgemäßen Vorrichtung, genauer auf das Adapterelement 4 des Bodenteils. Dabei zeigt Fig. 1 eine Situation, in der die Verriegelungsscheibe d.h. das zweite Befestigungselement 18 (vgl. Fig.2) geöffnet ist, d. h. in der der Boden aufgesteckt bzw. entnommen werden kann. Die folgenden Figuren zeigen jeweils Schnitte entlang der Linien A-A oder B-B aus Fig. 3.

Fig. 4a zeigt einen Schnitt entlang der Linie A-A aus Fig. 3. Man erkennt hier wiederum das Adapterelement bzw. das erste Befestigungselement 4, welches mittelbar an einem Träger 6 angeordnet ist. Dieser Träger 6 stellt dabei eine feste Einheit da, die an der Blasstation bzw. der Maschine befestigt ist und die Hubbewegung zum Schließen der Blasform ausführt. Im oberen Bereich dieses Trägers ist eine drehbare und entlang der Längsrichtung L höhenverstellbare Verriegelungsscheibe, bei der es sich hier um das zweite Befestigungselement 18 handelt, angeordnet.

Oberhalb des zweiten Befestigungselements 18 ist ein Tragekörper 28 bzw. die Bodenformaufnahme vorgesehen. Dieser Tragekörper 28 ist mithilfe von Befestigungselementen 42 (wie Schrauben) fest und auch höhenfest (d.h. bezüglich der Längsrichtung L fest) gegenüber dem Träger 6 angeordnet. Das zweite Befestigungselement 18 ist jedoch, wie gesagt, in gewissem Umfang zwischen der Trägerplatte 28 und dem Träger 6 höhenbeweglich, d. h. in der Richtung des Doppelpfeils L beweglich.

Das Bezugszeichen 12 bezieht sich auf einen stiftartigen Körper, der an dem ersten Befestigungselement 4 angeordnet ist. Dabei können die stiftartigen Körper 12 starr an dem ersten Befestigungselement 4 angeordnet sein, es wäre jedoch auch möglich, dass sie mit Federelementen gegenüber dem ersten Befestigungselement 4 vorgespannt sind. Die stiftartigen Körper 12 weisen dabei einen Kopf 16 und einen verengten Bereich 12a auf.

Zum Aufstecken bzw. Entnehmen des Bodens kann der stiftartige Körper 12 durch eine entsprechende Nut 14, genauer gesagt einen Abschnitt 14a dieser Nut in dem zweiten Befestigungselement 18 hindurchtreten. In der in Fig. 4a und 4b gezeigten geöffneten Stellung wird weiterhin das zweite Befestigungselement 18 über Fig. 4b gezeigte Federelemente 33 nach oben gedrückt, sodass der stiftartige Körper 12 bzw. Verriegelungsbolzen durch die Bohrung 14 treten kann und weiterhin anfangs noch ein Spalt zu dem Träger 6 verbleibt.

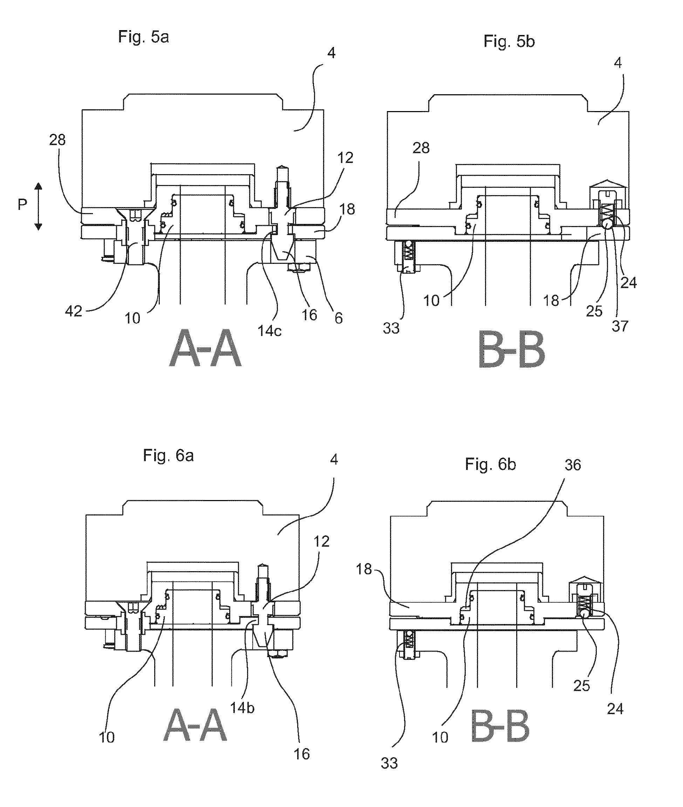

In Fig. 5a und 5b ist der Fixiervorgang des Bodenteils gezeigt. Dabei wird das zweite Befestigungselement 18 gedreht und so werden die stiftartigen Körper 12 in die Nut 14, die als Schlüssellochnut ausgeführt über diese Drehbewegung geführt. Während der Drehbewegung ist noch ein gewisser Spalt 14c zwischen dem zweiten Befestigungselement 18 und dem stiftartigen Körper 12 vorgesehen, der sich jedoch während des Fixiervorgangs verringert und entsprechend während des Lösevorgangs vergrößert.

Weiterhin wird durch eine Drehung des zweiten Befestigungselements 18 bewirkt, dass ein Federelement 24 immer stärker die Trägerplatte 28 und das zweite Befestigungselement 18 auseinanderdrückt. Dabei ist eine Federungseinrichtung 24 vorgesehen, sowie eine Kugel 25, welche in einer Nut läuft. Diese Nut ist in der dargestellten Ausführungsform als schiefe Ebene und Schraubenfläche 37 angeordnet. Die stiftartigen Körper 12 liegen dann unter Vorspannung auf dem zweiten Befestigungselement 18 an. Ein Lösen des Bodenteils von dem Träger 6 ist jetzt nicht mehr möglich, die Vorspannung, welche durch die Federelemente 24 bewirkt wird, ist jedoch zu klein für den Arbeitsbetrieb. Die Vorspannung der Federelemente 24 ist bewusst so klein gewählt, damit die Kräfte für das Verriegeln, d. h. für das Bewegen des zweiten Befestigungselements 18 nicht zu hoch werden.

Weiterhin wird das zweite Befestigungselement 18 gegen die Kraft des Federelements 33 nach unten gedrückt. Damit ist bei der in den Figuren 6a und 6b gezeigten Situation das erste Befestigungselement 4 und damit auch das Bodenteil vorgespannt und fixiert. Die Kugel 25 ist nunmehr in einer Endposition und dabei wirkt eine Kraft in einer Größenordnung zwischen 150 N und 250 N, bevorzugt zwischen 180 N und 240 N. Die Gegenkraft des Federelements 33 liegt bei etwa 80 N.

Daneben wäre es auch möglich, dass die Nuten in dem Befestigungselement 18 selbst mit schrägen Flächen ausgebildet sind und auf diese Weise bei einer Drehung des zweiten Befestigungselements 18 eine Vorfixierung des Bodenteils erreicht wird.

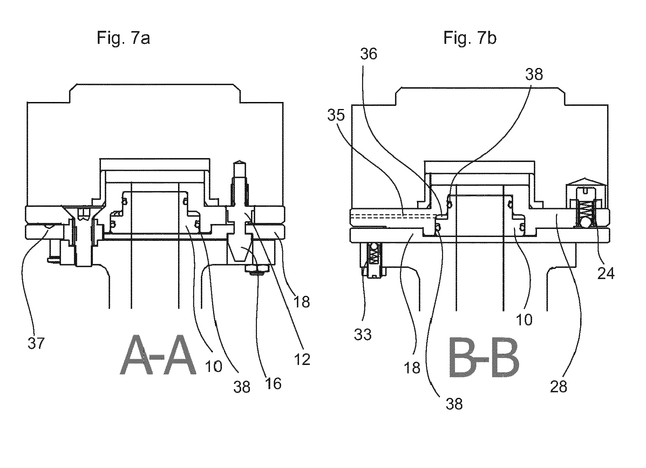

Bei der in den Figuren 7a und 7b gezeigten Situation wird zusätzlich das Kraftausübungselement 10 nach unten bewegt und übt eine weitere Kraft im Bereich von ca. 500 N aus, die die Trägerplatte 28 und das zweite Befestigungselement 18 auseinanderdrückt. Durch diese Kraft werden die stiftartigen Körper 12 nach unten belastet und damit das erste Befestigungselement 4 an dem Träger 6 fest angeordnet. Das Kraftausübungselement bzw. der Kolben 10 wird dabei hier durch eine pneumatische Luftzuführung 35, welche einen Luftraum 36 versorgt, nach unten bewegt. Das Bezugszeichen 38 bezieht sich auf Dichtungseinrichtungen, welche den Raum 36 abdichten. Der Luftdruck zum Bewegen des Kolbens kann dabei aus den Ringkanälen oder Reservoirs zur Verfügung gestellt werden, die auch die Druckluft beispielsweise zum Expandieren der Kunststoffbehältnisse zur Verfügung stellen. Soll das Bodenteil wieder gelöst werden, wird zunächst das Kolbenelement 10 entlastet, anschließend kann das zweite Befestigungselement wieder in die Öffnungsstellung gedreht werden und schließlich kann das Bodenteil von dem Träger 6 abgenommen werden.

Der Luftraum 36 ist hier zwischen dem Kraftausübungselement 10 und dem Tragekörper 28 ausgebildet. Vorteilhaft ist der Luftraum 36 ringkanalförmig ausgebildet. Bei Beaufschlagung mit Druckluft wir daher eine in Umfangsrichtung gleichmäßige Kraft auf das Kraftbeaufschlagungselement 10 aufgebracht, welche dieses nach unten gegenüber dem Tragekörper bewegt und damit den Tragekörper 28 und das zweite Befestigungselement 18 auseinander drückt, wobei die wirkende Kraft durch den Luftdruck in dem Luftraum 36 bestimmt wird.

Für den Arbeitsbetrieb kommt damit zusätzlich das Beaufschlagungselement 10 in Form des pneumatisch betätigbaren Kolbens in Eingriff, der den entstehenden Betriebslasten (z.B. durch Beschleunigung der Bodenformmassen) entgegenwirkt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Blasstation
- 2: Bodenteil
- 3: Seitenteile
- 4: Adapterelement, erstes Befestigungselement
- 6: Träger
- 10: Kraftausübungselement, Kolben
- 12: stiftartiger Körper
- 12a: verengter Bereich des stiftartigen Körpers
- 14: Nut, Bohrung
- 14a: Abschnitt der Nut
- 14c: Spalt
- 16: Kopf
- 18: zweites Befestigungselement
- 22: Hebel
- 24: Federelement
- 25: Kugel
- 28: Tragekörper, Trägerplatte
- 32: Kupplung
- 33: Federelement
- 34: Anschluss
- 35: Zuleitung zu Luftraum
- 36: Luftraum
- 38: Dichtungseinrichtung
- 42: Befestigungselement
- A-A: Linien
- B-B: Linien
- L: Längsrichtung

## Patentansprüche

1. Vorrichtung zum Umformen von Kunststoffvorformlingen in Kunststoffbehältnisse mit wenigstens einer Blasstation (1), welche einen Hohlraum aufweist, innerhalb dessen die Kunststoffvorformlinge zu den Kunststoffbehältnissen expandierbar sind, wobei die Blasstation (1) ein Bodenteil (2) aufweist, welches den Hohlraum begrenzt und wobei das Bodenteil (2) lösbar mittels eines Befestigungsmechanismus (10, 12, 14, 16, 18, 28) an einem Träger (6) angeordnet ist,
**dadurch gekennzeichnet, dass**
die Vorrichtung ein mit einer zuschaltbaren Kraft beaufschlagbares Kraftausübungselement (10) aufweist, welches in einem befestigten Zustand des Bodenteils (2) an dem Träger (6) eine Haltekraft erzeugt welche das Bodenteil (2) und den Träger (6) aneinander hält.

2. Vorrichtung nach Anspruch 1,
**dadurch gekennzeichnet, dass**
das Kraftausübungselement mit einem fließfähigen Medium oder mit einer magnetischen Kraft beaufschlagbar ist.

3. Vorrichtung (1) nach Anspruch 1,
**dadurch gekennzeichnet, dass**
der Befestigungsmechanismus (10, 12, 14, 16, 18, 28) wenigstens einen an einem ersten Befestigungselement (4) angeordneten stiftartigen Körper (12) aufweist, der in einem befestigten Zustand des Bodenteils (2) an dem Träger (6) in eine in einem zweiten Befestigungselement (18) angeordnete Nut (14) eingreift, wobei der stiftartige Körper (12) gegenüber der Nut (14) verschiebbar ist.

4. Vorrichtung (1) nach Anspruch 2,
**dadurch gekennzeichnet, dass**
Nut (14) derart beschaffen ist, dass ein Endabschnitt (16) des stiftartigen Körpers die Nut (14) in einem ersten Bereich (14a) der Nut (14) passieren kann und die Nut (14) in einem zweiten Bereich (14b) der Nut (14) nicht passieren kann.

5. Vorrichtung nach wenigstens einem der vorangegangenen Ansprüche,
**dadurch gekennzeichnet, dass**
zwischen dem ersten Befestigungselement (4) und dem zweiten Befestigungselement (18) in einem montierten Zustand des Bodenteils ein Tragekörper (28) angeordnet ist.

6. Vorrichtung (1) nach Anspruch 4,
**dadurch gekennzeichnet, dass**
das Kraftausübungselement (10) in einem mit dem fließfähigen Medium beaufschlagten Zustand eine das Befestigungselement (18) und den Tragekörper (28) auseinanderdrückende Kraft ausübt.

7. Vorrichtung (1) nach Anspruch 4,
**dadurch gekennzeichnet, dass**
in dem Tragekörper (28) oder in dem Befestigungselement (18) ein Kanal (35) für das fließfähige Medium angeordnet ist.

8. Vorrichtung (1) nach Anspruch 4,
**dadurch gekennzeichnet, dass**
das Kraftausübungselement (10) ein gegenüber dem Tragekörper (28) bewegbares Kolbenelement ist und ein Raum (36) zwischen dem Tragekörper (28) und dem Kolbenelement (10) mit dem fließfähigen Medium beaufschlagbar ist.

9. Vorrichtung (1) nach Anspruch 4,
**dadurch gekennzeichnet, dass**
in dem Tragekörper (28) eine Ausnehmung zum Aufnehmen des Kraftausübungselements (10) angeordnet ist.

10. Vorrichtung (1) nach Anspruch 4,
**dadurch gekennzeichnet, dass**
zwischen dem Tragekörper (28) und dem zweiten Befestigungselement (18) ein Vorspanneinrichtung (24) angeordnet ist, welche das Befestigungselement (18) und den Tragekörper (28) auseinander drängt.

11. Vorrichtung (1) nach Anspruch 2
**dadurch gekennzeichnet, dass**
die Vorrichtung (1) eine zweite Vorspanneinrichtung (33) aufweist, welche den Träger (6) und das zweite Befestigungselement (18) auseinander drängt.

12. Vorrichtung nach wenigstens einem der vorangegangenen Ansprüche,
**dadurch gekennzeichnet, dass**
das erste Befestigungselement (18) drehbar um eine vorgegebene Drehachse (X) angeordnet ist.

13. Verfahren zum Befestigen eines Bodenteils einer Vorrichtung zum Umformen von Kunststoffvorformlingen zu Kunststoffbehältnissen an einem Träger (6),
**dadurch gekennzeichnet, dass**
durch Beaufschlagen eines Kraftausübungselements (10) mit einer zuschaltbaren Kraft und insbesondere mit einem fließfähigen Medium eine Haltkraft zwischen dem Träger (6) und dem Bodenteil (2) erzeugt oder verstärkt wird.
